**Europäisches Patentamt**

(19) **European Patent Office**

**Office européen des brevets**

(11) Publication number: **0 056 012**

**A2**

(12) # EUROPEAN PATENT APPLICATION

(21) Application number: **82300037.7**

(22) Date of filing: **05.01.82**

(51) Int. Cl.³: **A 01 M 21/04**

(30) Priority: **05.01.81 US 222338**

(43) Date of publication of application:
**14.07.82 Bulletin 82/28**

(84) Designated Contracting States:
**AT BE CH DE FR GB IT LI NL SE**

(71) Applicant: **Porter, George D., Jr.**
**4905 80th Street**
**Lubbock Texas 79424(US)**

(71) Applicant: **Rhodes, Charles D.**
**17 West Brookhollow Street Route 3**
**Slaton Texas 79364(US)**

(72) Inventor: **Porter, George D., Jr.**
**4905 80th Street**
**Lubbock Texas 79424(US)**

(72) Inventor: **Rhodes, Charles D.**
**17 West Brookhollow Street Route 3**
**Slaton Texas 79364(US)**

(74) Representative: **Brereton, Paul Arthur et al,**
**REDDIE & GROSE 16 Theobalds Road**
**London WC1X 8PL(GB)**

(54) Herbicide applicator system.

(57) A metering tube (50) injects liquid herbicide into the central flow passage (48) of a fluid permeable rope (14). The liquid herbicide flows along the length of the rope and is emitted from the inside of the rope to its outside surface. The metering tube (50) is supplied from an accumulator tank (62) in which a volume of the liquid herbicide is pressured by compressed air. The liquid herbicide (64) in the accumulator tank (62) is maintained at a selected pressure by a charge of compressed air delivered from a storage tank (20) through a pressure regulator valve (80) to the accumulator tank. The metering tube (50) is lodged within the central flow passage (48) of the rope applicator (14) and a ferrule fastener (54) compressively engages the rope section surrounding the metering tube (50), thereby defining an annular seal which allows the flow of liquid herbicide through the metering tube (50) while preventing the flow of liquid herbicide by wicking action through the end of the rope. This arrangement provides close control of the flow rate of liquid herbicide into the rope applicator (14), and is not dependent upon the variables associated with wicking flow.

./...

Croydon Printing Company Ltd.

FIG. 2

## HERBICIDE APPLICATOR SYSTEM

This invention relates generally to liquid agent applicator and dispensing apparatus, and in particular, to contact applicators for post-emergence herbicides.

In the cultivation of row crops, grasses and weeds are controlled by the application of a herbicide agent. A wide spectrum of post-emergence herbicides, including selective and non-selective agents, are presently available for eliminating unwanted weeds and wild grasses such as Johnson grass, pigweed, cocklebur, sunflower, volunteer corn and shattercane. The broadcast use of selective herbicides which act only upon the weeds and grasses has been limited because of the detrimental effect on natural balances, by the harmful effects on wildlife and the surrounding environment. Other herbicides which are generally non-toxic and which have only a minimal effect on the environment are presently available which can kill virtually any plant by contact over a relatively small foliage area of the plant. Such non-selective herbicides, such as mixtures of isopropylamine salt of N- (phosphonomethyl) glycine and emulsifiable organic materials (available from Monsanto Corporation under the trademark Roundup), are used extensively to eliminate weeds or grass in cultivated row crops.

In cultivated row crops such as cotton and soybean, weeds and grass typically grow to a height substantially higher than the cultivated crop. One of the earliest methods for applying the non-selective, contact herbicide was to direct a spray onto the weed or grass while attempting to keep the liquid herbicide off of the crop, and by spot spraying, which killed weeds but also killed the surrounding crop.

In an attempt to minimize the amount of liquid herbicide which was lost or misdirected, recirculating and recycling sprayers were developed for spraying the tops of weeds and grasses which were taller than the crop. A straight jet of liquid herbicide was directed onto the weed and then recovered in a catch tank with the liquid herbicide then being recirculated through the system. This recycling arrangement has been used with success, but has been limited by crop damage and waste caused by splatter or misdirection of the spray by the wind.

A significant improvement over the recycling sprayers was realized by the development of the wick or wipe applicator which uses a material such as sponge, cloth or rope for swabbing the herbicide agent onto the weeds. The most commonly used applicator has been the rope applicator which has a wick portion immersed in a supply of liquid herbicide. In one such rope wick arrangement, a grommet seals the rope against the herbicide supply tank. In that arrangement, the flow of herbicide is obtained by true wicking action, in which the flow rate depends upon the capillary wicking action of the rope wick and by the tightness of the grommet seal, wherein the flow rate can only be adjusted by rotating the herbicide reservoir to higher or lower positions relative to the rope for increasing or decreasing flow. That method is inaccurate, is slow to change or adjust, and is difficult to maintain a desired level of rope wetness.

The rope wick applicator has been improved by attaching the ends of the ropes to the herbicide tank through threaded compression fittings which can be tightened or loosened to squeeze the rope and thereby restrict the flow. However, this system is also dependent upon the rotation of the chemical tank for increasing and decreasing the herbicide level for control.

In adapting the rope wick applicator for dispensing a liquid herbicide, a method is desired for delivering the herbicide to the rope, and once this is done, to control the flow so that the rope wetness can be adjusted according to field conditions. The foregoing methods for delivering the liquid herbicide to the rope involved different ways of attaching the rope to the herbicide tank. A serious problem in such a coupling is to prevent the connection from leaking. Rope wetness in the foregoing wicking methods is determined by the level of herbicide above the rope to increase flow because of the increase in head pressure. Rope wetness is also determined by the tightness of the seal around the rope. The tighter the seal, the slower the wicking action, and thus less wetness.

Yet another approach is to insert the end of the rope wick into a section of vinyl tubing and to seal the vinyl tubing by fitting a piece of shrink tubing over the connection. However, the sealing characteristics of this arrangement are not repeatable, which produces variations in rope wetness. For example, if as the rope is inserted into the tubing, the severed rope ends knot up, then the flow will be restricted. Additionally, the flow characteristics vary in proportion to the length of the shrink tubing.

Because the basic flow principle for each of the foregoing arrangements is by wicking of the rope, the effectiveness of each arrangement is limited in some way, and the overall system in each instance is difficult to adjust for changing field conditions. Moreover, the ends of the rope wick act as a filtering medium for the liquid herbicide, with the accumulation of filtered materials in the rope wick substantially restricting flow after a short period of use.

It will be appreciated from the foregoing discussion that the conventional wick arrangements all rely upon wicking or capillary action for the liquid herbicide to travel from a reservoir into the rope and then to the rope surface for wiping contact. The fundamental limitation in each of these systems is the lack of reliable, convenient, accurate and uniform control of liquid herbicide flow without excessive application of herbicide.

It is, therefore, an object of the present invention to provide a contact applicator for dispensing a liquid agent in which the delivery of liquid herbicide to the applicator is completely independent of wicking action.

A related object of the invention is to provide an applicator for dispensing a liquid herbicide in which the flow rate of herbicide delivered to the applicator is continuously controllable during field operations so that applicator wetness can be adjusted for varying conditions.

The foregoing objects are achieved according to the present invention by injecting a liquid agent into the core of a fluid permeable applicator through a metering device such as a tube or orifice plate. The liquid agent flows through the metering device into the core and then is emitted from the inside of the applicator to its outside surface. The metering device is received within the applicator so that the liquid herbicide is introduced at a controllable rate, proportional to head pressure, directly into its core. In a preferred embodiment, the applicator is a braided rope having a central flow passage core, and the metering device is a tube having a fine diameter bore. A compression fitting forms an annular seal in the rope material around the metering tube to prevent fluid flow by capillary action into its core.

Overall control of the herbicide flow rate through the metering tube is determined in part by the length of the metering tube, which serves effectively as a flow restrictor, with the resistance to fluid flow being a function of its length. For a metering tube of a given length, the flow rate is continuously adjustable by forcing liquid herbicide into the metering tube from an accumulator in which liquid herbicide is pressurized to a desired level by compressed air. The pressure level is controlled by delivering compressed air from an auxillary air tank through a regulator valve.

When used in conjunction with a sight guage, the regulator valve can be manually adjusted to maintain the applicator wetness for a given set of operating conditions, for example tractor speed, humidity, weed population and herbicide strength. Accordingly, weeds can be killed with minimum passes through the field but without excessive application and wasteful dripping of herbicide.

The novel features which characterize the invention are defined by the appended claims. The foregoing and other objects, advantages and features of the invention will hereinafter appear, and for purposes of illustration of the invention, but not of limitation, an exemplary embodiment of the invention is shown in the appended drawings, wherein:

FIGURE 1 is a perspective view of the applicator system of the invention mounted in operative combination with a tractor;

FIGURE 2 is a close-up perspective view of the central wedge array of the applicator system shown in FIGURE 1;

FIGURE 3 is a sectional view which illustrates the coupling engagement of a metering tube with a rope applicator;

FIGURE 4 is a sectional view of the metering tube coupling assembly taken along the lines IV-IV in FIGURE 3;

FIGURE 5 is a sectional view which illustrates the mechanical coupling of the rope applicator assembly to a herbicide manifold, taken along the lines V-V of FIGURE 2; and,

FIGURE 6 is a sectional view similar to FIGURE 5 which illustrates the use of an orifice plate flow restrictor.

In the description which follows, like parts are marked throughout the specification and drawings with the same reference numerals, respectively. The drawings are not necessarily to scale and in some instances proportions have been exaggerated in order to more clearly depict certain features of the invention.

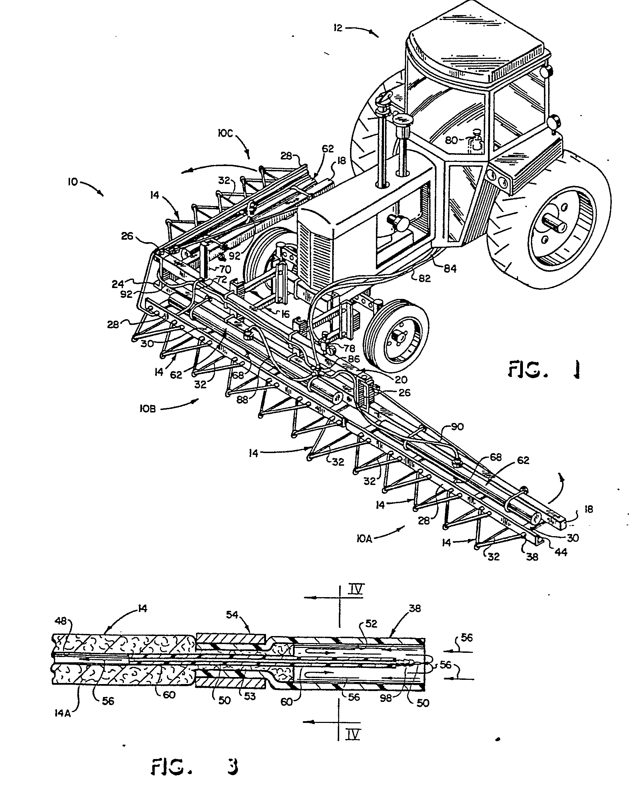

Referring now to the drawings, and in particular to FIGURE 1, a rope applicator 10 is supported forwardly of a tractor 12 for applying a liquid herbicide by wiping contact against weeds and grasses growing in a cultivated row crop, for example cotton or soybeans. The rope applicator assembly 10 applies herbicide by rubbing or wiping the weed with an absorbent rope 14 that is saturated with the herbicide. The herbicide can be either a selective or non-selective systemic agent, with the elevation of the applicator assembly 10 being set above the crop level·for non-selective herbicides and below the crop level for selective herbicides.

The rope applicator assembly 10 includes a left wedge array 10A, a center wedge array 10B, and a right wedge array 10C. The left and right wedge arrays 10A, 10C are pivotally mounted on opposite ends of the center array 10B. The right array is illustrated in the retracted position for highway travel, and the left array is illustrated in the extended position for field operation. The entire rope applicator assembly 10 is supported on a parallel arm linkage 16 which can raise the assembly in elevation from one foot to four and one-half feet above ground level. The operating elevation of the applicator assembly 10 is continuously variable in this range in response to the driving force developed by a hydraulic lift cylinder (not shown).

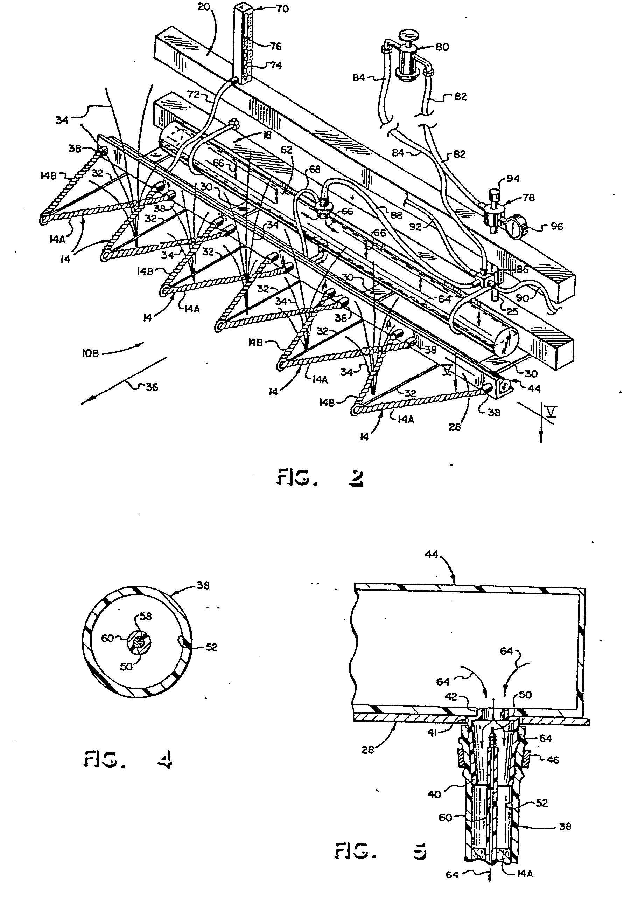

Referring now to FIGURES 1 and 2, the center rope wedge array 10B comprises lower and upper tool bars 18, 20 which are in the form of rigid steel box beams. The upper and lower tool bars 18, 20 are sealed at each end, and in addition to providing mechanical support, serve as a compressed air reservoir. The upper and lower reservoirs are connected in fluid communication by a tube 25. The lower and upper tool bars are rigidly interconnected by left and right hinge support arms 22, 24. The left and right wedge arrays 10A, 10C are pivotally coupled onto the support arms by means of a pivot pin 26. Thus, the left and right arrays can be extended forwardly for field operation or retracted rearwardly for highway travel, as desired.

Each array includes multiple rope wedges 14 arranged in an overlapping V-configuration. The rope wedges 14 are supported in a linear, horizontal array by an angle beam 28. The angle beam 28 is rigidly connected to the lower tool bar 18 by cross plates 30.

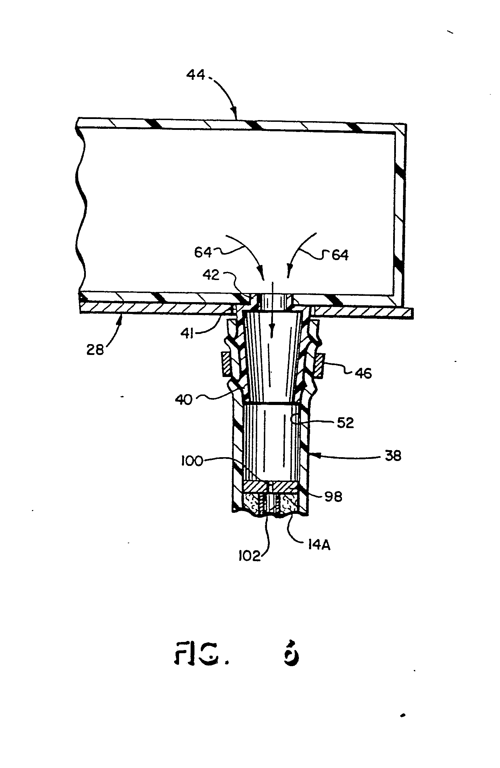

Referring now to FIGURES 2 and 5, each rope wedge 14 is supported by the angle beam 28 in a horizontal repeating V pattern. This V arrangment is maintained by engaging an intermediate portion of each rope applicator with a stand-off bar 32 so that the mid-section of the rope is engaged forwardly of and in spaced relation with the angle beam 28. According to this arrangement, a half-section 14A, 14B of each rope applicator is held in transverse relation with respect to the angle beam 28 on opposite sides of the stand-off bar.

Preferably, the legs 14A, 14B of adjacent rope wedges 14 are overlapping as can best be seen in FIGURE 2. According to this arrangement, the overlapping legs of adjacent rope wedges define a converging opening for engaging the grass stalks 34. Because the rope sections 14A, 14B extend transversely with respect to the line of travel as indicated by the arrow 36, the weed plant stalks 34 are contacted in sliding engagement by the rope sections, and each weed surface is exposed to a series of successive positions of contact and wiping engagement with the saturated rope sections 14A, 14B. The sliding engagement enhances the desirable wiping action, and extends the duration of wiping action for a given tractor speed.

Referring again to FIGURES 2 and 5, the rope segments 14A, 14B are mechanically and hydraulically coupled to a manifold 44 by a coupling sleeve 38 and by a coupling nipple 40. As can best be seen in FIGURE 5, the coupling nipple 40 is slightly tapered and extends through an opening 41 in the angle beam 28. The coupling nipple .40 is provided with an inlet port fitting 42 which is received in fluid communication with a herbicide distribution manifold 44. The inlet port fitting 42 is secured by threaded engagement with the manifold side wall, with the union being sealed with a bonding agent. Alternatively, the manifold 44 may comprise a series of tee fittings which are coupled by short, flexible conduit sections. The coupling sleeve 38 is forced into telescoping engagement with the tapered nipple 40, and is thereafter sealed with a clamping band 46.

Referring now to FIGURES 3 and 5, the rope applicator 14 preferably comprises a length of plastic material, preferably braided, and which can be Nylon, polyester, acrylic, dacron or polypropylene. According to an important feature of the invention, the rope 14 is provided with a central flow passage 48 which extends along its length, in contrast to solid rope applicators of conventional design. According to this hollow wick arrangement, in which the rope applicator is provided with a central flow passage, liquid herbicide is delivered directly into the central flow passage 48 at a controlled flow rate through a flow restrictor assembly 49. In one embodiment, the flow restrictor assembly 49 comprises a fine bore metering tube 50.

As can best be seen in FIGURE 3, the discharge end of the metering tube 50 is received within the central flow passage 48, while the inlet end of the metering tube 50 is disposed outside of the central flow passage, and within the bore 52 of the coupling sleeve 38. The object of this arrangement is to convey the liquid herbicide from the manifold 44 directly into the central flow passage 48 at a controlled flow rate through the metering tube 50, so that precise control can be exercised on the amount of liquid herbicide delivered to the rope applicator.

To insure that the herbicide is admitted only through the bore of the metering tube 50, the end of the rope 14 is sealed in the region 53 of overlap with the metering tube 50 by the compressive action of a ferrule clamp 54. According to this arrangement, the problems associated with wicking action are eliminated. The metering tube 50 delivers the liquid herbicide into the central flow pasage 48 of the rope 14 where it then is conveyed from the inside of the rope to the outside surface by capillary flow. However, the supply of liquid herbicide is delivered at a controllable rate through the metering tube 50 and is not dependent upon the variables associated with wicking. The annular seal defined by the tightly clamped rope section 53 prevents the flow of liquid herbicide by capillary or wicking action, with the result that the herbicide is forced through the metering tube 50 as indicated by the arrows 56.

Referring again to FIGURE 3, the rate of herbicide flow through the metering tube 50 depends upon the diameter of the metering tube bore 58, by the length of the metering tube 50 and by the pressure level of the herbicide. Because it is desirable to remove the metering tube 50 from time to time to clean it, or to replace it with a longer or shorter metering tube to change the flow rate, the metering tube 50 is received within a guide tube 60. The metering tube 50 can be easily inserted into or withdrawn out of the guide tube 60 while the ferrule 54 remains in place.

Referring again to FIGURES 1 and 2, the guage pressure of the liquid herbicide in the manifold 44 is maintained at a selected level by an air/herbicide accumulator 62. The liquid herbicide, indicated by the dashed line 64, is maintained under pressure by compressed air delivered into the accumulator as indicated by the arrows 66. Liquid herbicide is conveyed from the accumulator 62 through a conduit 68 leading from the underside of the accumulator 62 and over the top of the accumulator to prevent siphoning downwardly to the herbicide manifold 44. The guage pressure of the herbicide in the manifold 44 is indicated by a sight guage 70 which is coupled in fluid communication with the manifold 44 through a sample conduit 72. The sight guage is provided with index marks 74 and a floating indicator ball 76 whereby pressure changes with respect to a desired setting are visually indicated.

The compressed air 66 is circulated from the tool bar/air tank 20 through a multiport on-off valve 78 and a regulator valve 80. As can be seen in FIGURE 2, the regulator valve 80 is coupled in series fluid circuit relation between the compressed air reservoir 20 and the accumulator 62 by air conduits 82, 84, a multiport coupler 86 and a delivery conduit 88. The accumulators of the left and right arrays are likewise pressurized by delivery conduits 90, 92 which are also connected to the multiport coupler 86.

Prior to undertaking field operations, the air tank 20 is charged to a relatively high pressure level, for example 150 psi, through the charge fitting 94 as indicated by the guage 96 on the multiport on-off valve 78. Additionally, the accumulator 62 and herbicide manifold 44 are filled with enough herbicide mixture to last during a half-day or full day operation, depending upon weed population. The sight guage pressure is run up, for example to the thirty inch index mark, until the rope applicators are fully saturated. Then, the pressure is returned to a lower level, for example to a level in the eight to sixteen inch index range, for field operation. These adjustments are carried out manually, by adjusting the regulator valve 80 in the cab of the tractor (FIGURE 1). Immediately prior to entering the field, the applicator height should be set carefully to ensure proper contact with weed foliage only. The lowest wiper contact point should be at least two inches above the crop canopy. The tractor is operated at a ground speed of around three to five mph. However, as the weed population increases, the tractor ground speed should be reduced to ensure good coverage.

The cab-mounted regulator 80 provides close regulation of the compressed air pressure, and with reference to the sight guage, the operator can monitor the changes in liquid herbicide pressure with respect to a desired setting. The operator can quickly and easily compensate for any changes conditions, such as humidity, wind, temperature, weed population and tractor speed. Because of the dynamic pressure adjusting features of the system, the operator can quickly and easily increase or decrease the wetness of the rope applicator, according to changing conditions, and without interrupting operation.

Moreover, the wedge or "zig-zag" shape of the rope applicator array allows the weeds to be combed through, with the result that herbicide will be thoroughly applied to the weed stalks. Additionally, the rope applicators can be easily hosed off after use, and the herbicide can be flushed from the system by filling the accumulator with water and then raising the accumulator pressure and forcing water through the ropes. The metering tubes are likewise easily removable for cleaning or for replacement as desired.

From the foregoing discussion of a preferred embodiment, it will be apparent that the problems associated with wicking applicator systems are eliminated by the operator-controlled, metered delivery of liquid herbicide into the core of the rope applicator. The herbicide is delivered at the precise rate required for a given set of operating conditions. The herbicide flows along the length of the rope through the central passage, until the central passage is filled, and then flows to the outside surface of the rope by forced capillary flow through the fibers and strands of the rope. Increasing or decreasing the air pressure in the accumulator by adjustment of the regulator valve accurately controls the flow rate of herbicide into the rope.

Because the liquid herbicide is delivered into the central passage 48 of the rope at a pressure which is slightly above atmospheric, a pressure gradient exists across the radial thickness of the rope. Thus the flow rate of the herbicide is a combination of capillary flow and forced flow by virtue of the pressure gradient, so that the herbicide is emitted at a substantially constant flow rate. Thus the wetness of the rope applicator is predictable and is uniform along the length of each rope section. Moreover, the problems associated with restricted capillary flow are overcome by this arrangement in which the mechanical point of connection between the rope applicator and the manifold is bypassed by the ferrule clamp, annular seal and metering tube 50.

The metering tube 50 is preferably constructed of stainless steel, and has a bore diameter of approximately 0.4 millimeters with a length of 127 millimeters. This combination of bore diameter and length gives the effect of an orifice plate aperture having a diameter of 0.2 millimeters. The inlet end of the metering tube 50 is reinforced by a ferrule grip 98 which limits travel of the metering tube 50 through the guide tube 60, while also providing a convenient gripping surface for inserting and withdrawing the tube.

The coupling sleeve 38 is preferably constructed of a durable vinyl material, and the ferrule 54 is preferably constructed of a deformable metal such as brass or aluminum, and is applied with a crimping tool. The guide tube 60 is preferably constructed of a durable plastic material such as polypropylene.

It will be appreciated that, according to the broadest aspect of the invention, that other metering devices may be used to good advantage. For example, it may be desirable for certain applications to substitute a needle valve assembly for the metering tube 50. Alternatively, the flow restrictor assembly 49 may comprise an orifice plate 98 having a calibrated aperture 100 as illustrated in FIGURE 6, and is used in combination with a larger diameter tube 102 for delivering liquid herbicide, at a comparable flow rate, directly into the central flow passage 48.

**0056012**

It will be appreciated that in practice, the longitudinally extending central flow passage 48 as illustrated in FIGURE 3 herein is not uniform nor as well defined as that depicted. In braided ropes, the central flow passage 48 is closely bounded by the plaited bundles of strands and follows a generally straight path. However, the radial boundary of the flow passage generally is not uniform along its length, with strands of opposite braids touching in some places, but still defining a relatively low resistance fluid flow path. It will be appreciated, that however the central flow passage is configured within a fluid permeable rope or other wick device, the invention is practiced by delivering a liquid agent into its central flow passage through a metering device or flow regulator device.

CLAIMS:

1. An applicator system for dispensing a liquid herbicide characterized in that an array of fluid permeable dispenser elements (14) is coupled to a manifold (44) for distributing liquid herbicide; a flow restrictor assembly (49) is coupled in fluid communication between said manifold and said dispenser elements; an accumulator tank (62) is provided for receiving a volume of liquid herbicide and a volume of compressed air, said accumulator tank having a liquid discharge port coupled in fluid communication with said herbicide manifold and having a compressed air inlet port; and, a compressed air storage tank (20) having an air delivery port coupled in fluid communication with the compressed air inlet port of said accumulator tank.

2. The applicator system as defined in claim 1, characterized in that a pressure regulator valve (80) is coupled in series fluid circuit relation between said accumulator tank (62) and said compressed air storage tank (20).

3. The applicator system as defined in claim 2, characterized in that said pressure regulator valve (80) is manually adjustable and including a sight guage (70) coupled in fluid communication with said manifold (44), said sight guage having index marks (74) for indicating relative changes in the fluid pressure of herbicide in said manifold.

4. The applicator system as defined in claim 1, characterized in that said fluid permeable dispenser element (14) is a rope (14A) having a core flow passage (48) and said flow restrictor assembly (49) comprising an elongated flow metering tube (50) having a discharge port (58) received within said core flow passage.

5. The applicator system as defined in claim 1, characterized in that said flow restrictor assembly (49) comprises an orifice plate (98) having a calibrated aperture (100).

6. An applicator assembly for dispensing a liquid agent, characterized by a coupling sleeve (38) having an open bore; a fluid permeable rope (14A) having a fluid flow passage (48) extending along its length, said rope having an end portion received in the bore of said coupling sleeve; an elongated metering tube (50) having a discharge end portion received within said flow passage and having an inlet end portion projecting into the bore of said coupling sleeve; and, a fastener (54) compressively engaging said coupling sleeve in the region of overlap with said rope, the compressive engagement of said fastener with said coupling sleeve causing radial deformation of said coupling sleeve and said rope thereby defining an annular fluid seal extending radially outwardly from the metering tube through the rope in the region of compressive engagement.

7. Apparatus for dispensing a liquid agent from a moving vehicle (12) characterized in that a support frame (18) is provided for mounting said dispensing apparatus onto the vehicle and a stand-off bar (32) projects forwardly of said support frame; said dispensing apparatus comprising a rope applicator (14) having a fluid flow passage (48) extending throughout its length, the end portions of said rope applicator being mechanically coupled to said support frame on opposite sides of said stand-off bar with an intermediate portion of said rope applicator being engaged and supported by said stand-off bar forwardly of and in spaced relation with said support frame whereby a length (14A, 14B) of said rope applicator is held in transverse relation with respect to said support frame on opposite sides of said stand-off bar thereby defining a repeating "V" formation; and, means (49) are coupled in fluid communication with said rope applicator for injecting the liquid agent into the fluid flow passage of said rope applicator.·

8. The dispensing apparatus as defined in claim 7, characterized in that a manifold (44) is mounted on said support frame (18) for distributing the liquid agent to the rope applicator (14); and, said injection means (49) is coupled in series fluid circuit relation between said manifold and the fluid flow passage of said rope applicator.

9. The dispensing apparatus as defined in claim 8, characterized in that said injection means (49) comprises a metering tube (50) having a fine diameter bore (58) and a length which greatly exceeds the diameter of its bore.

10. An applicator for dispensing a liquid herbicide agent, characterized by a fluid permeable rope (14A) having an axially extending core flow passage (48) and an elongated flow metering device (50) having a discharge end portion received within the core flow passage and having an inlet end portion disposed for admitting the liquid herbicide agent from a pressurized source.

FIG. 1

FIG. 3

0056012

FIG. 2

FIG. 4

FIG. 5

FIG. 6